# EUROPEAN PATENT APPLICATION

(11) **EP 1 225 161 A2**
(43) Date of publication of application: **24.07.2002**
(21) Application number: 02380011.3
(22) Date of filing: 21.01.2002
(51) Int. Cl.: C05F 3/06

(54) **Machine for treatment of animal excrement and its utility as fertiliser**

(30) Priority: 23.01.2001 ES 200100145
(71) Applicant: Pane Cabal, Jaime, 08211 Barcelona (ES); Vallmitjana Casademunt, José Ramon, 08211 Barcelona (ES)
(72) Inventor: Pane Cabal, Jaime, 08211 Barcelona (ES); Vallmitjana Casademunt, José Ramon, 08211 Barcelona (ES)
(74) Representative: Maldonado Jordan, Julia

(57) **Abstract**

Machine provided with a main chamber (1) with two lower compartments (8) and (11) defined by an intermediate partition (9) communicated on their upper part, compartment (8) establishing a purine preheating coil (5), an extension of the out-put tube (4) of a burner combustion chamber (2) for obtaining a solid phase of said purines by their instantaneous desiccation. Coil (5) additionally acts as elevating wheel of the purines towards a tray (12) located on combustion chamber (3), which pours on the latter, the residues falling towards a bottom collector tray (15), from where they are brought out to the exterior of the chamber (1), whilst the gaseous phase (water and methane vapour) comes out of chamber (1) through out-let (22) for subsequent separation from its components.

## Description

### OBJECT OF THE INVENTION

The present invention refers to a machine that has been specially conceived for treatment of swine excrement, those commonly called "purines", though said machine is equally used for the treatment of the excrements of other animals.

The object of the invention is to achieve a transformation of said excrement that avoids the effects of environmental contamination, inherent to the same.

### BACKGROUND OF THE INVENTION

In a preferred scope of the practical application of the invention, that of the purine of swine, an enormous amount of purine is currently produced, that in principle is stored at farm level, in tanks dimensioned for this purpose and that are subsequently scattered over the country side in order to achieve the natural transformation of the same and the subsequent fertilizing of the land, in amounts regulated by the different public administrations.

Due to its high level of contamination, relative legal standards exist as regards the areal amount of purine that can be used on the soil and as regards the frequency with which said process can be repeated, but in practice, these standards are not strictly complied with, implying the consequent environmental damage, since more purine is produced, than that necessary for cultivation fertilizing.

### DESCRIPTION OF THE INVENTION

The machine for the treatment of purines proposed by the invention, solves the previously indicated problem in a totally satisfactory manner, permitting a perfect depuration of the excess purines and achieving as a result, a dry extract, in addition to methane gas, the latter being of use as fuel for the actual machine and for any other application.

For this, and more specifically, the machine is structured as from a chamber that includes a burner capable of reusing the actual methane gas obtained from the facility or any other type of fuel, and its combustion supplies the combustion gases to a coil also included inside the actual machine, from which the gases finally exit to the outside through the corresponding chimney, said coil having a double function, on the one hand acting as preheating means for the purines that are previously beaten to achieve an adequate dissolution of possible solid residues, and on the other hand acting as feeding wheel of said purines towards a tray located over the burner combustion chamber, and that pours the preheated purines over the latter, the coil working zone obviously being made independent by means of a structural separation from the combustion chamber service zone by means of a suitably dimensioned steel plate separation.

To achieve this second effect of said coil, a series of tubes, open at their ends, are constructed to form integral part, being filled with purines when they occupy the lower end position and that, due to a specific slope, pour onto said tray when these are in their top limit position.

The high temperature reached in the burner fuel chamber converts the purines practically instantaneously into a dry element, with evaporation of the water initially contained in said purines and with the generation of methane gases.

The solid substance falls on a lower collection tray aided by an extraction worm, whilst, on the external burner combustion chamber surface, a descaling scraper acts, that operates by weight and that removes the solid residues adhered on said chamber, also falling on the lower collector tray.

Obviously, in order that the coil can act as purine elevating wheel, and so that the scraper or descaler can act on the burner fuel chamber, it has been provided that both the coil and the chamber be equipped with a rotating and constant movement, supplied by an engine detached from the main chamber, from which the collector worm engine and the actual burner are also detached.

The gases generated inside the main chamber exit to the outside to be lead towards a decanter in which the water is extracted from the same, subsequently passing on to a caustic soda boiler for extraction of the methane gas acids, which, once clean, pass on to a storage tank.

The main chamber shall be equipped with safety valves that limit the maximum pressure inside the same, establishing in turn, at the gas out-puts, one-way valves that prevent the back flow of gases.

### DESCRIPTION OF THE DRAWINGS

In order to complete the description being made, and with the object of aiding the better understanding of the characteristics of the invention, according to a preferred, exemplary practical embodiment of the same, this description is enclosed, forming integral part of the same, with a set of drawings in which, with illustrative and non limitative character, the following have been represented:
Figure 1 shows a side elevational diagram of a machine for treatment of excrements carried out according to the object of this invention.
Figure 2 shows an axial detail of the coil that is a component of said machine.
Figure 3 shows a perspective detail of the purine distributing tray over the fuel chamber.
Figure 4 shows a diagram corresponding to the treatment of gases generated during the normal operation of the machine.
Figure 5 shows a diagram of the scraper for removing incrustations of dry purine that may have remained adhered to the fuel chamber.
Figure 6 shows the beaten purine collection tank that feeds the distributing tubes over the fuel chamber.
Figure 7 finally shows the prior tank for storage of purines that are beaten inside the same.

### PREFERRED EMBODIMENT OF THE INVENTION

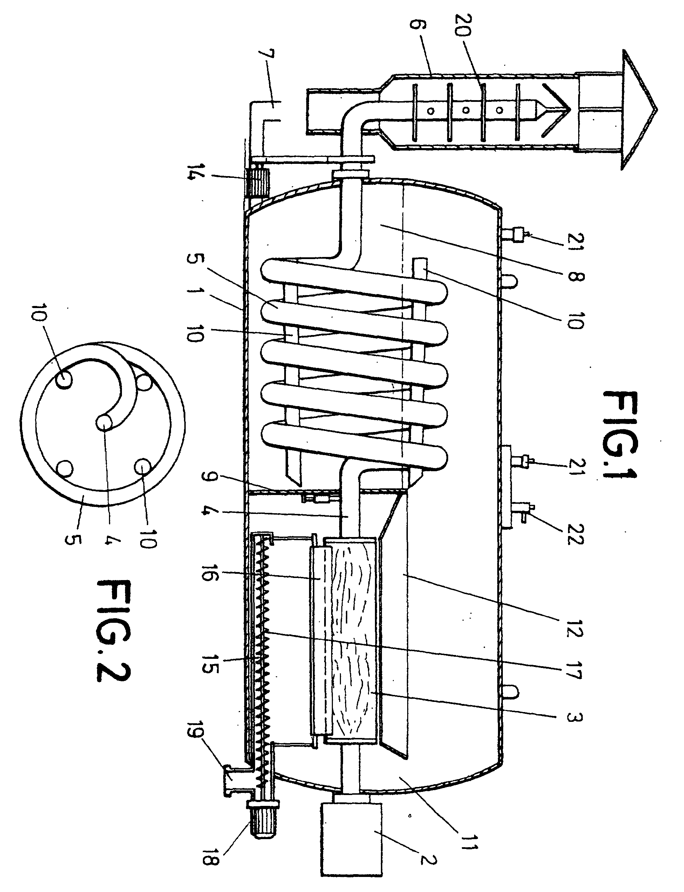

In view of the specified figures and specially of Figure 1, it can be observed how the proposed machine is constituted as from a main cylindrical chamber (1), with horizontal axis, to which a burner (2) is coupled at one of its ends, that can use any conventional fuel, advantageously associated to a combustion chamber (3), the gas out-let tube (4) of which, obviously in opposition to the burner (2), extends into a coil (5) of considerable diameter, that emerges to the outside of the oven and is finished off in the form of a cooling chimney (6) for fuel gases.

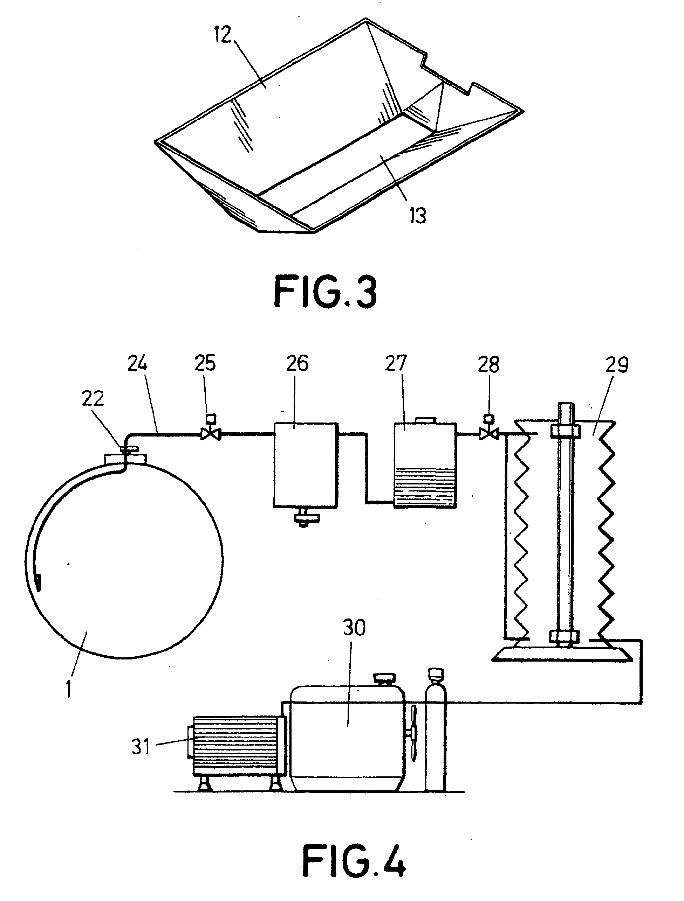

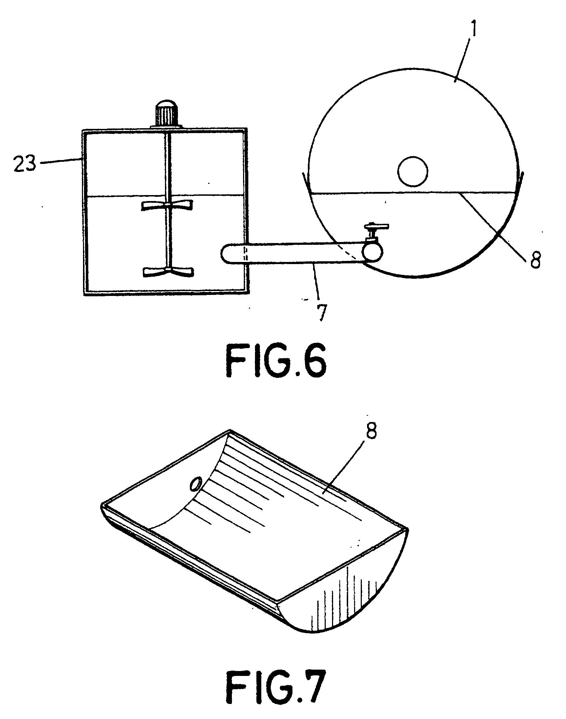

Main chamber (1) is provided with an in-put (7) for the purines that have been previously subjected to the effect of beating in the tank of Figure 7, in such a way, that said purines fall into a compartment (8) of said chamber, as shown in detail in Figure 6, and which is protected by an intermediate steel plate (9) separation, that separates them from the zone where the combustion chamber (3) is located, this separator (9) is interrupted over said combustion chamber (3) and as regards from which, coil (5) projects at the top part, which includes, attached on its internal perimeter, a plurality of discharging tubes (10), that at the top limit situation, adopts a slope towards the compartment (11) in which the combustion chamber (3) is situated, and that acts as wheel, filling with purine when occupying the lower zone of the chamber (8) and pours towards the chamber (11) when occupying the top end position, this pouring being performed specifically onto a tray (12) represented in detail in Figure 3, equipped at its bottom with a longitudinal groove (13) that remains superimposed over the combustion chamber (3), also cylindrical, in such a way, that the purines fall over the latter, which is subjected to a rotational and constant movement, in the same manner as the actual coil (5), by means of an engine (14), located at the end of the main chamber (1), as is also observed in Figure 1.

In accordance with this structure, the purines that fall into compartment (8) are advantageously titrated towards tray (12) during the rotational movement of the coil (5) and fall through groove (13) on the top base of the combustion chamber (3) that is also rotating, so that said purines, which have been previously preheated by the coil (5) in compartment (8), when contacting with the fuel chamber (3) are converted into solid phase that falls towards a lower collector tray (15), and into a water vapour and methane gas mixture that occupies the main chamber (1).

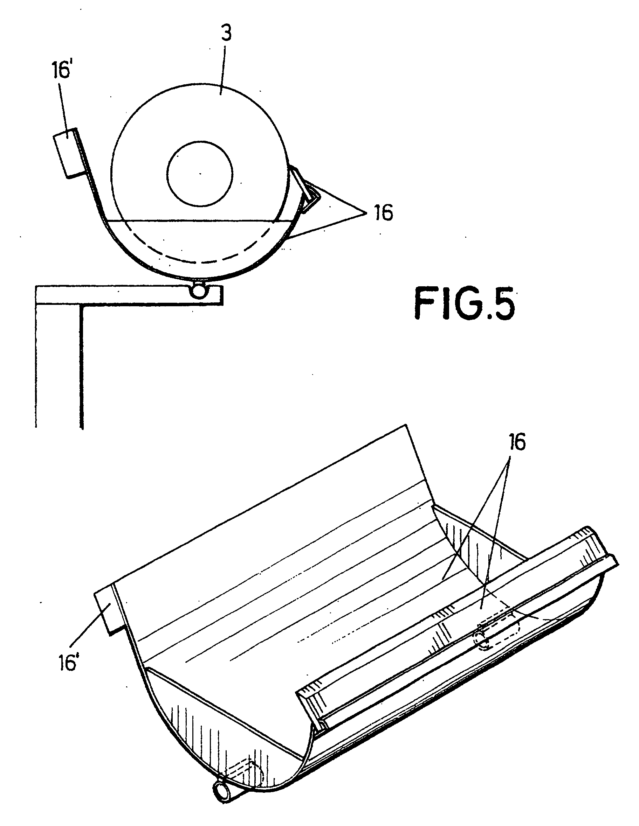

A scraper or descaler (16), described in detail in Figure 5, that acts by counterweight (16') over the external surface of the combustion chamber (3) to prevent the solid residues from adhering on the same, and a worm (17) removes the solid residue from the collector tray (15) activated by an engine (18) towards the out-put (19).

Chimney (6) shall be equipped with a plurality of separator plates (20) so that the combustion gases cool advantageously before reaching the environment.

For an optimum operation of the machine, the combustion chamber (3) service temperature shall be comprised between 250°C and 350°C, and the main chamber (1) shall be equipped with safety valves (21) that limit the pressure existing in the same, and which also carry a burner disconnection system when the temperature rises more than planned.

The purine gases emitted exit from main chamber (1) through out-put (22) preferably provided with a stopcock and pass on to a decanter (26), through a conduit (24) provided with one-way values (25), to reach a decanter (26) where the water vapour condensation and its corresponding extraction is produced, whilst the methane gas comes out of the decanter (26) through conduit (24) to reach a second decanter or bubbler (27) provided with liquid caustic soda, with another one-way valve at its out-put, with depressor (28) finally passing the methane gas to a tank (29), preferably constructed of rubber and of the bellows type, from which said gas can be used, for example, to feed engine (30) which activates an electric generator (31) for the use of the obtained electric current.

## Claims

1. Machine for treatment of animal excrement and its utility as fertiliser, which, being specially conceived for the treatment of purines and having as an objective the obtention, as from the same and separately, of a solid residue intended as fertiliser, water and methane gas, is **characterised in that** it is constituted as from a main chamber (1), cylindrical and of horizontal axis fed with purine, that by means of an intermediate steel sheet separation (9) establishes two compartments (8) and (11) communicated on the upper zone, establishing in one of these compartments (11), the combustion chamber (3) inside of which, and by means of a burner (2) of any conventional type, said combustion chamber is heated, which tube (4) for out-put of the combustion gases crosses through said separation (9) and extends inside compartment (8) into a heating coil (5), its exit to the exterior of the main chamber (1) being finished off in a cooling chimney (6) for the combustion gases (3) and having provided that coil (5) be rotational, activated by an engine (14) and that said coil (5) acts simultaneously like a "wheel" for transferring the preheated purines into compartment (8) and places them in compartment (11) subsequently pouring them on the combustion chamber (3) of the burner so that the burner separates them by heating in solid and gaseous phase.

2. Machine for treatment of animal excrement and its utility as fertiliser according to claim 1, **characterised in that** the coil (5) includes a plurality of discharging tubes (10), advantageously attached on its perimeter, open at an end, which on the lower zone of compartment (8) is filled with purine stored in the tray that configures said compartment (8) and that when it reaches the upper zone of the same, due to its rotational direction, and due to an appropriate slope, pours into a compartment (11), specifically on a tray (12) located immediately over the combustion chamber (3) and is equipped, on a lower level with a longitudinal groove (13) placed in correspondence with the upper base of the combustion chamber (3).

3. Machine for treatment of animal excrement and its utility as fertiliser, according to the previous claims, **characterised in that** under the combustion chamber (3) of burner (2), inside main chamber (1), a tray (15) is placed, collector or recollector of the solid residues, provided with a worm (17) for entrainment of said residues towards the outside and deposits them in a container for their subsequent application as fertiliser, the entrainment of the worm is performed by an electrical engine (18) placed on the exterior of main chamber (1), having provided that over said collector tray, a scraper (16) is placed, with the purpose of descaling all the solid particles that may have remained incrusted in the cylinder or combustion chamber

4. Machine for treatment of animal excrement and its utility as fertiliser, according to the previous claims, **characterised in that** the main chamber (1), that is equipped with an entrance (7) for the previously beaten purines, and with at least one safety valve (21) that limits the pressure existing inside the same, includes an out-put (22) for the purine gaseous phase, constituted by a water vapour and methane gas mixture, that is led towards the tube (24), provided with one-way valves (25) towards a decanter (26) for pouring and extraction of the water, after which it passes on to a liquid caustic soda bubbler (27), and through a tube (24), provided with a second one-way valve (28) to finally reach a methane gas storage tank (29) for its subsequent use as combustion of the machine or other uses.
